(19) Europäisches Patentamt
European Patent Office
Office européen des brevets

(11) **EP 4 049 863 B1**

(12) **EUROPEAN PATENT SPECIFICATION**

(45) Date of publication and mention
of the grant of the patent:
**12.11.2025 Bulletin 2025/46**

(21) Application number: **20880177.9**

(22) Date of filing: **14.09.2020**

(51) International Patent Classification (IPC):
*B60C 15/06* (2006.01)    *C08L 1/02* (2006.01)
*C08L 21/00* (2006.01)    *B60C 1/00* (2006.01)
*B60C 13/00* (2006.01)    *C08L 7/00* (2006.01)

(52) Cooperative Patent Classification (CPC):
**C08L 1/02; B60C 1/0025; B60C 15/0607;**
**C08L 7/00; C08L 9/00; C08L 9/06; C08L 21/00;**
B60C 2001/0058; B60C 2013/006; B60C 2015/061;
B60C 2015/0617; Y02T 10/86

(86) International application number:
**PCT/JP2020/034725**

(87) International publication number:
**WO 2021/079650 (29.04.2021 Gazette 2021/17)**

(54) **TIRE**

REIFEN

PNEUMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **23.10.2019  JP 2019192811**

(43) Date of publication of application:
**31.08.2022  Bulletin 2022/35**

(73) Proprietor: **Sumitomo Rubber Industries, Ltd.**
**Kobe-shi, Hyogo 651-0072 (JP)**

(72) Inventor: **YOSHIYASU, Hayato**
**Kobe-shi, Hyogo 651-0072 (JP)**

(74) Representative: **TBK**
**Bavariaring 4-6**
**80336 München (DE)**

(56) References cited:
**EP-A1- 1 798 060       EP-A1- 2 599 645**
**EP-A1- 2 818 332       EP-A1- 3 196 048**
**JP-A- 2013 253 222     JP-A- 2014 047 328**
**JP-A- 2014 144 997     JP-A- 2016 175 992**
**JP-A- 2018 154 181     JP-A- 2018 178 007**

**Description**

TECHNICAL FIELD

The present invention relates to a tire having improved ride comfort and steering stability with a good balance.

BACKGROUND ART

A technique of giving anisotropy to a modulus of a rubber by compounding a fiber material such as a cellulose fiber into a tire member is known (for example, Patent Document 1).
Patent Document 2 discloses a pneumatic tire having a tire member prepared by using a rubber composition of which rubber physical properties after vulcanization satisfy the following specific value. $\tan\delta \leq 0.11$ (1), $1.10 \leq (E^*a/E^*b) \leq 1.53$ (2), $0.072 \leq (E^*a/HS) \leq 0.140$ (3), where $\tan\delta$ is $\tan\delta$ when viscoelasticity is performed at an initial strain of 10%; a dynamic strain of 1% and 50°C; $E^*a$ is complex elastic modulus $E^*a$ in a tire circumferential direction when viscoelasticity is performed at an initial strain of 10%, a dynamic strain of 1% and 50°C; $E^*b$ is complex elastic modulus $E^*b$ in a direction perpendicular to the tire circumferential direction when viscoelasticity is performed at an initial strain of 10%, a dynamic strain of 1% and 50°C; and HS represents hardness (HS) at 50°C measured according to JISK6253-1.

PRIOR ART DOCUMENT

Patent Document

Patent Document 1: JP 5691463 B
Patent Document 2: JP 2018 154181 A

SUMMARY OF THE INVENTION

PROBLEM TO BE SOLVED BY THE INVENTION

However, if a fiber size (particularly a fiber length) of the fiber material is too large, there is a problem that hardness of the rubber becomes too high, making the rubber become rigid, and use in the tire member is restricted. Moreover, a rubber composition comprising a conventional fiber material has a high elastic modulus, and currently, a market demand value cannot have been sufficiently met in ride comfort and vibration.
It is an object of the present invention to provide a tire having improved ride comfort and steering stability with a good balance.

MEANS TO SOLVE THE PROBLEM

As a result of intensive studies, the present inventor has found that a tire having improved ride comfort and steering stability with a good balance can be obtained by arranging a rubber layer formed of a rubber composition which has anisotropy in strength and rigidity with an organic nanomaterial and has a $\tan\delta$ (70°C) and a modulus ratio within predetermined ranges at a specific position on a tire side part, and completed the present invention.
That is, the present invention is as defined in claim 1, and further beneficial embodiments are provided in the dependent claims.

EFFECTS OF THE INVENTION

According to the present invention, a tire is provided which has improved ride comfort and steering stability with a good balance by arranging a rubber layer formed of a rubber composition which comprises an organic nanomaterial and has a $\tan\delta$ (70°C) and a modulus ratio within predetermined ranges at a specific position on a tire side part.

BRIEF DESCRIPTION OF THE DRAWINGS

FIG. 1 is a cross-sectional view showing a configuration of a tire according to one embodiment of the present disclosure.

FIG. 2 is a cross-sectional view showing a configuration of a tire according to one embodiment of the present disclosure.

FIG. 3 is a cross-sectional view showing a configuration of a tire according to one embodiment of the present disclosure.

EMBODIMENT FOR CARRYING OUT THE INVENTION

A procedure for producing a tire including a production of the rubber composition that is one embodiment of the present disclosure will be described in detail below. However, the following descriptions are illustrative for explaining the present invention, and are not intended to limit the technical scope of the present invention to this description range only. Besides, in the present specification, a numerical range identified with "to" means to include the numerical values of both ends.

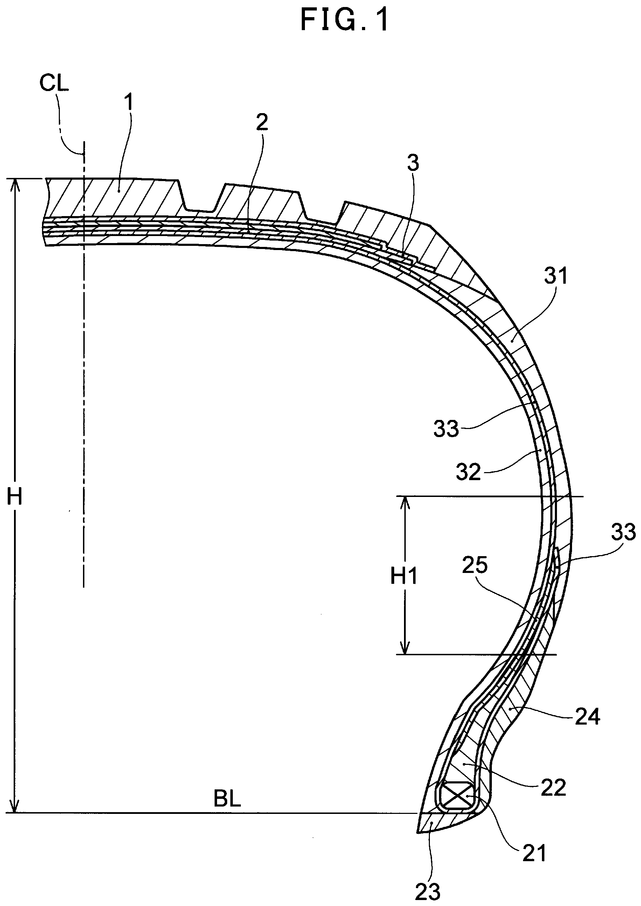

FIGS. 1 to 3 illustrate the tire that is one embodiment of the present disclosure, but the present invention is not limited thereto. FIGS. 1 to 3 show a part of a cross section of the tire perpendicular to the circumferential direction. In FIGS. 1 to 3, a vertical direction is a tire radial direction, a horizontal direction is a tire axial direction, and a direction perpendicular to a paper surface is a tire circumferential direction. In FIGS. 1 to 3, the alternate long and short dash line CL represents an equatorial plane of the tire. A shape of this tire is symmetrical with respect to the equatorial plane, except for a tread pattern. Besides, in the present specification, the term "outer side in a tire axial direction" means outside in an axial direction when a plane passing through a tire equator (indicated by the line CL in FIGS. 1 to 3) is defined as a center.

The tire of the present disclosure comprises a tread part extending in a circumferential direction to form an annular shape, a pair of sidewall parts arranged on both sides of the tread part, a pair of bead parts, each of the pair bead parts having a bead core, at least one carcass layer moored to the bead core, a chafer in contact with a rim.

The bead part of the tire according to the present disclosure is located inside in a tire axial direction of a sidewall 31. The bead part comprises a bead core 21 and a bead apex 22 extending radially outward from this core. The bead apex 22 is tapered outward in the tire radial direction.

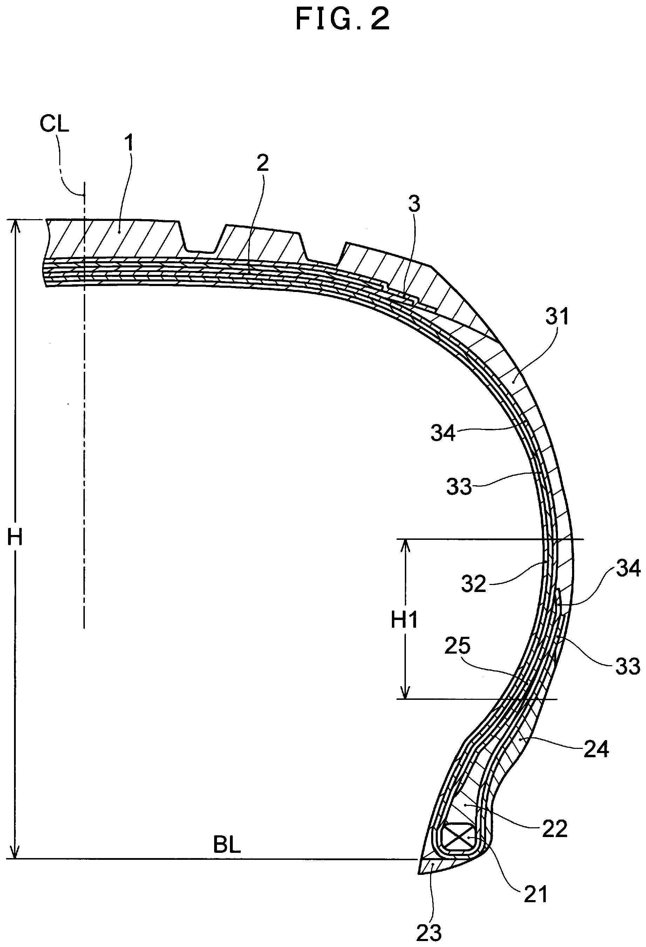

The tire of the present disclosure comprises at least one carcass layer moored to the bead core (two layers of a first carcass ply 33 and a second carcass ply 34 in FIG. 2). The carcass ply is folded around the bead core 21 from inside to outside in the tire axial direction. Due to this folding, a main part and a folded part are formed on the carcass ply 33, 34.

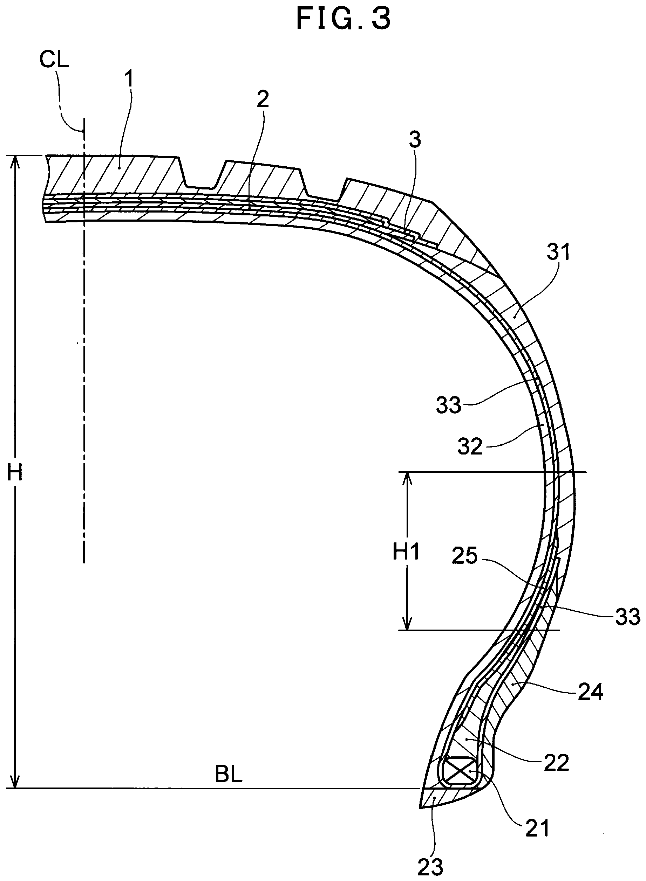

The tire of the present disclosure may comprise a sheet-like strip apex. In FIGS. 1 to 3, the strip apex 25 generally extends in a tire radial direction. The strip apex 25 is laminated with the bead apex 22 in the vicinity of the inner end in the tire radial direction. The strip apex 25 is sandwiched between the main part and the folded part of the first carcass ply 33 or the second carcass ply 34 in the vicinity of the inner end in the tire radial direction. The strip apex 25 may be completely covered by the main part and the folded part of the first carcass ply 33 or the second carcass ply 34 (FIGS. 1 and 2) or may not (FIG. 3).

The tire of the present disclosure has a rubber layer formed of a rubber composition comprising an organic nanomaterial at a position outer side in a tire axial direction with respect to an innermost carcass layer and inner side in the tire axial direction with respect to a sidewall surface. Such rubber layer is not particularly limited as long as it is an inner layer member of a tire, but is appropriately used as, for example, a strip apex, an inner layer sidewall, a bead reinforcing layer, an insulation, or the like.

In FIGS. 1 to 3, an arrow H indicates a tire cross-sectional height H from a baseline BL to a center position of a tread surface. This baseline BL passes through the innermost point of the bead core 21 in the tire radial direction. This baseline BL extends in the tire axial direction.

It is considered that the tire of the present disclosure has improved ride comfort and steering stability with a good balance by the following mechanism.

An appropriate damping property and a flexible response with respect to an input (vibration) from a vertical direction of the tire during rolling are realized by arranging a rubber layer formed of a rubber composition which has anisotropy in strength and rigidity with an organic nanomaterial oriented in the tire circumferential direction and has a $\tan \delta$ (70°C) and a modulus ratio within predetermined ranges at a position outer side in a tire axial direction with respect to an innermost carcass layer and inner side in the tire axial direction with respect to a sidewall surface, and responsiveness to an input during steering is improved by increasing the rigidity in the oriented direction (tire circumferential direction).

In addition, given that a vibration from a road surface during running and an input during steering by a car are transmitted to a tire via a rim, and that generation of a reaction force when the tire is twisted prevails on layers outer side with respect to a carcass part, effects of the present invention are exhibited more prominently by arranging the rubber layer so as to cover a part or all of the region of 25 to 50% H1 of the tire cross-sectional height H from the baseline BL to the center position of the tread surface.

The rubber layer is arranged so as to cover a part or all of the region of 25 to 50% H1 of the tire cross-sectional height H. If the region of 25% or more is not covered, the merit of anisotropy of the rubber is unlikely to be exhibited, and good steering stability and ride comfort cannot be obtained. On the other hand, if the region of 50% or less is not covered, the ride comfort deteriorates after the tire is mounted to a vehicle due to deterioration of rolling resistance and influence of a permanent compression strain of the rubber layer.

Inner and outer ends of the rubber layer in the tire radial direction can be appropriately set so that the rubber layer covers a part or all of the region of 25 to 50% H1 of the tire cross-sectional height H. For example, the inner end of the rubber layer in the tire radial direction can be located at a region of 5 to 40%, 10 to 30%, or 15 to 20% of the tire cross-sectional height H, and the outer end of the rubber layer in the tire radial direction can be located at a region of 30 to 100%, 40 to 90%, 50 to 80%, or 60 to 70% of the tire cross-sectional height H.

The rubber layer covers preferably 30% or more, more preferably 50% or more, further preferably 70% or more, particularly preferably 90% or more of the region of 25 to 50% H1 of the tire cross-sectional height H.

The rubber layer is located preferably 0.5 mm or more, more preferably 1.0 mm or more inner side in the tire axial direction with respect to the sidewall surface, from the viewpoint of suppressing generation of cracks due to repeated deformation during running.

In the present disclosure, unless otherwise specified, a dimension and an angle of each member of the tire are measured in a state where the tire is incorporated into a standardized rim and is filled with air so as to have a standardized internal pressure. At the time of measurement, no load is applied to the tire. Besides, in the present specification, the "standardized rim" is a rim defined, for each tire in a standard system including a standard on which the tire is based, by the standard, e.g., a "standard rim" in JATMA, "Design Rim" in TRA, or "Measuring Rim" in ETRTO. Besides, in the present specification, the "standardized internal pressure" is an air pressure defined, for each tire in a standard system including a standard on which the tire is based, by the standard, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

The tire according to the present disclosure may be a pneumatic tire or a non-pneumatic tire. Moreover, examples of the pneumatic tire include a tire for a passenger car, a tires for truck or bus, a tire for a two-wheeled vehicle, a high-performance tire, and the like. Besides, the high-performance tire in the present specification is a tire having a particularly excellent grip performance and is a concept including a racing tire used for a racing vehicle.

[Rubber composition]

The rubber layer is formed of a rubber composition comprising an organic nanomaterial (preferably a biomass nanomaterial, more preferably nanocellulose).

The rubber composition preferably comprises 1 to 50 parts by mass of an organic nanomaterial based on 100 parts by mass of the rubber component.

It is preferable that an average diameter D of the organic nanomaterial is 1.0 to 2000 nm, an average length L thereof is 0.10 to 10 $\mu$m, and an aspect ratio L/D thereof is 2 to 500. Besides, in the present disclosure, the average diameter D and the average length L can be measured by image analysis of scanning electron micrographs, image analysis of transmission micrographs, analysis of X-ray scattering data, a pore electrical resistance method (Coulter principle), and the like.

<Rubber component>

As rubber components comprised in the rubber composition, diene-based rubbers such as an isoprene-based rubber, a styrene-butadiene rubber (SBR), and a butadiene rubber (BR) are appropriately used. The rubber component may be a rubber component comprising an isoprene-based rubber, a SBR, and a BR, a rubber component consisting only of an isoprene-based rubber, a SBR, and a BR, a rubber component consisting only of an isoprene-based rubber and a SBR, or a rubber component consisting only of an isoprene-based rubber and a BR.

(Isoprene-based rubber)

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber when compounded in the rubber component is preferably 20% by mass or more, more preferably 25% by mass or more, further preferably 30% by mass or more, particularly preferably 35% by mass or more, from the viewpoint of abrasion resistance. On the other hand, an upper limit of the isoprene-based rubber in the rubber component is, but not particularly limited to, preferably 90% by mass or less, more preferably 85% by mass or less, further preferably 80% by mass or less, particularly preferably 75% by mass or less.

(SBR)

The SBR is not particularly limited, examples of which include, for example, a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, an E-SBR is preferable from the viewpoint that it can well improve fuel efficiency and abrasion resistance. These SBRs may be used alone, or two or more thereof may be used in combination.

A styrene content of the SBR is preferably 5% by mass or more, more preferably 10% by mass or more, further preferably 15% by mass or more, from the viewpoint of abrasion resistance. Moreover, it is preferably 25% by mass or less, more preferably 24% by mass or less, from the viewpoints of temperature dependence of grip performance and abrasion resistance. Besides, in the present specification, the styrene content of the SBR is calculated by $^1$H-NMR measurement.

A vinyl content of the SBR is preferably 10 mol% or more, more preferably 13 mol% or more, further preferably 16 mol% or more, from the viewpoints of ensuring reactivity with silica, rubber strength, and abrasion resistance. Moreover, the vinyl content of the SBR is preferably 45 mol% or less, more preferably 40 mol% or less, further preferably 35 mol% or less, from the viewpoints of prevention of increase in temperature dependence, wet grip performance, elongation at break, and abrasion resistance. Besides, in the present specification, the vinyl content of the SBR (1,2-bond butadiene unit amount) is measured by infrared absorption spectrometry.

A weight-average molecular weight (Mw) of the SBR is preferably 200,000 or more, more preferably 300,000 or more, further preferably 400,000 or more, from the viewpoint of abrasion resistance. Moreover, the Mw is preferably 2,500,000 or less, more preferably 2,000,000 or less, from the viewpoints of cross-linking uniformity, etc. Besides, the Mw can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the SBR when compounded in the rubber component is preferably 5% by mass or more, more preferably 10% by mass or more, further preferably 15% by mass or more, particularly preferably 20% by mass or more, from the viewpoint of abrasion resistance. Moreover, an upper limit of the content of the SBR in the rubber component is, but not particularly limited to, preferably 90% by mass or less, more preferably 85% by mass or less, further preferably 80% by mass or less, particularly preferably 75% by mass or less.

(BR)

A BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

The cis 1,4 bond content (cis content) of the high cis BR is preferably 95% or more, more preferably 97% or more. Examples of the high cis BR include, for example, BR1220 manufactured by Zeon Corporation, BR130B, BR150B, BR150L manufactured by Ube Industries, Ltd., BR730 manufactured by JSR Corporation, and the like. When the high cis BR is compounded, low temperature characteristics and abrasion resistance can be improved. Examples of the rare-earth-based BR include, for example, BUNA-CB25 manufactured by LANXESS, and the like.

Examples of the SPB-containing BR include those in which 1,2-syndiotactic polybutadiene crystal is chemically bonded with BR and dispersed, but not those in which the crystal is simply dispersed in the BR. Examples of such SPB-containing BR include VCR-303, VCR-412, VCR-617 manufactured by Ube Industries, Ltd, and the like.

Examples of modified BRs include those obtained by adding a tin compound after polymerizing 1,3-butadiene by a lithium initiator and in which the end of the modified BR molecule is further bonded by tin-carbon bond (a tin-modified BR), a butadiene rubber having a condensed alkoxysilane compound at its active end, and the like. Examples of such modified BRs include, for example, BR1250H (tin-modified) manufactured by ZS Elastomer Co., Ltd., an S-modified polymer (modified for silica), and the like.

A weight-average molecular weight (Mw) of the BR is preferably 300,000 or more, more preferably 350,000 or more, further preferably 400,000 or more, from the viewpoints of abrasion resistance and grip performance, etc. Moreover, it is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the BR when compounded in the rubber component is preferably 5% by mass or more, more preferably 10% by mass or more, further preferably 15% by mass or more, particularly preferably 20% by mass or more, from the viewpoint of abrasion resistance. An upper limit of the content of the BR in the rubber component is, but not particularly limited to, preferably 90% by mass or less, more preferably 85% by mass or less, further preferably 80% by mass or less, particularly preferably 75% by mass or less.

(Other rubber components)

As the rubber components according to the present disclosure, rubber components other than the above-described isoprene-based rubbers, SBRs, and BRs may be compounded. As other rubber components, cross-linkable rubber components commonly used in the rubber industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Organic nanomaterial>

The rubber composition comprises an organic nanomaterial as a reinforcing filler. As the organic nanomaterial according to the present disclosure, various organic fibers having a shape anisotropy and a diameter at a nano level can be used. Such organic fiber is not particularly limited, and any of a natural fiber (a plant fiber, an animal fiber) and a chemical fiber (a synthetic fiber, a semi-synthetic fiber, a regenerated fiber) can be used, but a natural fiber (hereinafter referred to as a biomass nanomaterial in some cases) is preferable. The organic nanomaterial may be used alone, or two or more thereof may be used in combination.

Examples of the synthetic fiber include, for example, an aramid fiber, a polyethylene terephthalate fiber, a polyethylene naphthalate fiber, a polyester fiber, a nylon fiber, a rayon fiber, and the like, and among them, an aramid fiber is preferable.

As the biomass nanomaterial in the present disclosure, natural polysaccharide nanofibers such as nanocellulose, a chitin nanofiber, and a chitosan nanofiber are appropriately used. As the biomass nanomaterial, one including nanocellulose is preferable, and one consisting only of nanocellulose is more preferable. The biomass nanomaterial may be used alone, or two or more thereof may be used in combination.

Examples of nanocellulose include, for example, a cellulose nanofiber (CNF), a cellulose nanocrystal (CNC), and the like, and among them, a CNF is preferable.

The CNF is obtained by defibrating a cellulose fiber, and examples of the cellulose fiber include fibers separated from plant fibers such as a plant-derived pulp, wood, cotton, hemp, bamboo, gossypium, kenaf, hemp, jute, banana, coconut, cassaba, seaweed, a tea leaf, an agricultural waste product, and used paper. Moreover, as the cellulose fiber, a fiber separated from an animal fiber produced by a sea squirt which is a marine animal, a bacterial cellulose produced by an acetic bacterium, and the like can also be used.

The CNC is a fibrous crystal obtained by treating a cellulose nanofiber with sulfuric acid or hydrochloric acid.

Nanocellulose can be classified depending on a raw material, a producing method, and the like. For example, the CNF may be made from a plant-derived cellulose microfibril (or a constituent fiber thereof), examples of which also include a bacterial cellulose (BC) (a bacterial nanofiber (a bacterial CNF)), a lignocellulose nanofiber (LCNF), a CNF obtained by an electrospinning method, and the like. The BC is a CNF created by a microorganism (a bacterium-derived CNF), and is usually different in purity and structure (diameter and network structure) from a plant-derived cellulose. The LCNF is a lignin-containing CNF (a lignin-coated CNF). Moreover, the CNF obtained by an electrospinning method is a CNF obtained by spinning a solution of a cellulosic material while applying a voltage. Since this method uses a solution, a nanofiber of a cellulose derivative (such as the above-exemplified derivative, for example, cellulose acetate, etc.) can also be obtained.

Nanocellulose may be modified (purified, processed). An aspect of modification can be selected according to the purpose, examples of which include, for example, hydrophobization, introduction of a functional group, and the like. Specific examples of modification include acid modification [for example, carboxylation (such as carboxymethylation), phosphorylation, sulfation, or sulfonation, etc.], ester or acyl modification (such as acetylation), amine modification, amide modification, epoxy modification, fluorene modification, and the like. Besides, an acid group and an amine group may form a salt.

The chitin nanofiber is obtained by defibrating a chitin fiber, and examples of the chitin fiber include fibers separated from animal fibers such as shells of Crustacea such as a crab and a shrimp and of an insect and a squid muscle (a middle bone), and the like. Moreover, as the chitin fiber, a fiber separated from a cell wall of Fungi such as a mushroom and mold can also be used.

The chitosan nanofiber is a defibrated chitosan fiber obtained by deacetylating the chitin fiber. Therefore, a chitosan fiber obtained by deacetylating a natural chitin fiber separated from an animal fiber is preferable, and a chitosan fiber obtained by deacetylating a natural chitin separated from a crab or a shrimp is more preferable.

As the biomass nanomaterial, a commercially available material may be used, or a material produced by a known production method may be used. Specific examples of the biomass nanomaterial include, for example, BiNFi-s manufactured by Sugino Machine Limited, ELLEX manufactured by Daio Paper Corporation, Cellenpia manufactured by Nippon Paper Industries Co., Ltd., and the like.

A content of the organic nanomaterial based on 100 parts by mass of the rubber component is preferably 1.0 part by mass or more, more preferably 5.0 parts by mass or more, further preferably 10 parts by mass or more, particularly preferably 12 parts by mass or more, from the viewpoint of anisotropy of the rubber composition. Moreover, it is preferably 50 parts by mass or less, more preferably 45 parts by mass or less, further preferably 40 parts by mass or less, from the viewpoint of breaking strength of the rubber composition.

An average diameter (also referred to as an average fiber diameter or an average width) D of the organic nanomaterial is preferably 1.0 nm or more, more preferably 2.0 nm or more, further preferably 3.0 nm or more, from the viewpoints of rigidity and processability of the rubber composition. Moreover, it is preferably 2000 nm or less, more preferably 1000 nm or less, further preferably 500 nm or less, particularly preferably 100 nm or less, from the viewpoints of rigidity and breaking strength of the rubber composition.

An average length (also referred to as an average fiber length) L of the organic nanomaterial is preferably 0.10 $\mu$m or more, more preferably 0.15 $\mu$m or more, further preferably 0.20 $\mu$m or more, from the viewpoint of anisotropy of the rubber composition. Moreover, it is preferably 10 $\mu$m or less, more preferably 8.0 $\mu$m or less, further preferably 6.0 $\mu$m or less, from the viewpoints of rigidity and breaking strength of the rubber composition.

An aspect ratio L/D of the organic nanomaterial is preferably 2 or more, more preferably 5 or more, further preferably 10 or more, particularly preferably 20 or more, from the viewpoint of anisotropy of the rubber composition. Moreover, it is preferably 500 or less, more preferably 400 or less, further preferably 300 or less, from the viewpoint of breaking strength of the rubber composition.

<Other reinforcing fillers>

In the rubber composition, as reinforcing fillers other than organic nanomaterials, those commonly used in the conventional rubber industry can be compounded, such as carbon black, silica, aluminum hydroxide, calcium carbonate, alumina, clay, and talc. Among them, the rubber composition preferably comprises carbon black. Besides, when silica is compounded, it is preferably used in combination with a silane coupling agent.

(Carbon black)

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. They may be used alone, or two or more thereof may be used in combination.

A nitrogen adsorption specific surface area ($N_2SA$) of carbon black is preferably 30 $m^2$/g or more, more preferably 35 $m^2$/g or more, further preferably 40 $m^2$/g or more, from the viewpoints of weather resistance and reinforcing property. Moreover, it is preferably 250 $m^2$/g or less, more preferably 220 $m^2$/g or less, from the viewpoints of dispersibility, fuel efficiency, fracture characteristics, and durability. Besides, the $N_2SA$ of carbon black in the present specification is a value measured according to JIS K 6217-2: "Carbon black for rubber industry-Fundamental characteristics-Part 2: Determination of specific surface area-Nitrogen adsorption methods-Single-point procedures" A Method.

An amount of dibutyl phthalate (DBP) oil absorption of carbon black is preferably 70 mL/100 g or more, more preferably 85 mL/100 g or more, more preferably 100 mL/100 g or more, from the viewpoints of weather resistance and durability. Moreover, it is preferably 120 mL/100 g or less, more preferably 118 mL/100 g or less, further preferably 115 mL/100 g or less, from the viewpoint of elongation at break.

A content of carbon black when compounded based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 100 parts by mass or less, more preferably 80 parts by mass or less, further preferably 60 parts by mass or less, from the viewpoint of fuel efficiency.

(Other compounding agents)

The rubber composition can appropriately comprise compounding agents conventionally and generally used in the tire industry, for example, oil, wax, processing aid, an antioxidant, stearic acid, zinc oxide, a vulcanizing agent such as sulfur, a vulcanization accelerator, and the like, in addition to the above-described components.

Examples of oil include, for example, mineral oils such as aromatic oils, process oils, and paraffin oils, and the like. Among them, it is preferable to use process oils because they reduce burden on the environment.

A content of oil when compounded based on 100 parts by mass of the rubber component is preferably 1 part by mass or more, more preferably 3 parts by mass or more, further preferably 5 parts by mass or more, from the viewpoint of processability. Moreover, it is preferably 80 parts by mass or less, more preferably 70 parts by mass or less, further preferably 60 parts by mass or less, from the viewpoint of abrasion resistance. Besides, in the present specification, the content of oil also includes an amount of oil contained in an oil-extended rubber.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

Examples of the antioxidant include, but not particularly limited to, for example, amine-based, quinoline-based, quinone-based, phenol-based, and imidazole-based compounds, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.5 parts by mass or more, more preferably 1.0 part by mass or more, from the viewpoints of securing a sufficient vulcanization reaction and obtaining good grip performance and abrasion resistance. Moreover, it is preferably 5.0 parts by mass or less, more preferably 4.5 parts by mass or less, further preferably 4.0 parts by mass or less, from the viewpoint of preventing deterioration.

Examples of vulcanizing agents other than sulfur include, for example, vulcanizing agents comprising a sulfur atom such as TACKIROL V-200 manufactured by Taoka Chemical Co., Ltd., DURALINK HTS (sodium hexamethylene-1,6-bisthiosulfate dihydrate) manufactured by Flexsys, and KA9188 (1,6-bis(N,N'-dibenzylthiocarbamoyldithio) hexane) manufactured by LANXESS, organic peroxides such as dicumyl peroxide, and the like.

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, sulfenamide-based vulcanization accelerators and thiazole-based vulcanization accelerators are preferable from the viewpoint that desired effects can be obtained more appropriately.

Examples of the sulfenamide-based vulcanization accelerator include CBS (N-cyclohexyl-2-benzothiazolyl sulfenamide), TBBS (N-t-butyl-2-benzothiazolyl sulfenamide), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, di-2-benzothiazolyl disulfide, and the like. They may be used alone, or two or more thereof may be used in combination.

A content of the vulcanization accelerator when compounded based on 100 parts by mass of the rubber component is preferably 0.5 parts by mass or more, more preferably 1.0 part by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

A tan $\delta$ of the rubber composition according to the present disclosure when a viscoelasticity measurement is performed under a condition of an initial strain of 10%, a dynamic strain amplitude of 1%, a frequency of 10 Hz, and a temperature at 70°C (also referred to as tan $\delta$ (70°C)) is 0.08 or more. That is, the rubber composition satisfies the following Inequality (1):

$$\tan \delta \geq 0.08 \ (1)$$

By setting tan $\delta$ (70°C) to 0.08 or more, an appropriate damping property can be obtained, and ride comfort tends to be less likely to be deteriorated. The tan $\delta$ (70°C) is preferably 0.09 or more. On the other hand, the tan $\delta$ (70°C) is preferably 0.35 or less, more preferably 0.32 or less, further preferably 0.30 or less, from the viewpoint of fuel efficiency. The tan $\delta$ (70°C) can be appropriately adjusted by changing types and contents of rubber components (particularly, a SBR) and reinforcing fillers (particularly, carbon black). Besides, in the present disclosure, tan $\delta$ (70°C) is a value obtained by the measuring methods in Examples which will be described later.

In the rubber composition (vulcanized rubber) according to the present disclosure, a value of a ratio of 100% modulus in a grain direction M100a to 100% modulus in a cross-grain direction M100b as an index of anisotropy (M100a/M100b, may be herein referred to as a "modulus ratio") is 1.10 to 1.50 from the viewpoint of an excellent anisotropy. That is, the rubber composition satisfies the following Inequality (2):

$$1.10 \leq (M100a/M100b) \leq 1.50 \ (2)$$

The modulus ratio (M100a/M100b) is more preferably 1.15 to 1.40, more preferably 1.20 to 1.30. M100a and M100b can be appropriately adjusted by changing a content, an average diameter D, an average length L, an aspect ratio L/D, etc. of the organic nanomaterial. Besides, in the present disclosure, M100a and M100b are values obtained by the measuring methods in Examples which will be described later, and a "grain direction" means a rolling direction when a sheet is formed by extrusion or shearing, while a "cross-grain direction" means a direction perpendicular to the grain direction.

[Rubber composition and method of producing tire]

The rubber composition according to the present disclosure can be produced by a known method, for example, by a method of kneading components other than vulcanizing agents and vulcanization accelerators, of the above-described components, with a known kneading machine used in the general rubber industry such as a Banbury mixer, a kneader, and an open roll, then adding the vulcanizing agents and the vulcanization accelerators to the mixture to further knead them, and then vulcanizing them, and the like.

The tire comprising the rubber layer can be produced by a usual method using the rubber composition. That is, an unvulcanized rubber composition, in which each of the above-described components is compounded as necessary with the rubber component, is extruded into a shape of a corresponding rubber layer to obtain a rubber layer in which organic nanomaterials are oriented in a grain direction. Then, the rubber layer is attached together with other tire members on a tire molding machine so that the organic nanomaterials are oriented in a tire circumferential direction, and the mixture is molded by a usual method to form an unvulcanized tire, and this unvulcanized tire is heated and pressurized in a vulcanizing machine, thereby producing a tire.

EXAMPLE

Although the present invention will be described based on Examples, it is not limited to Examples.

Various chemicals used in Examples and Comparative examples are collectively shown below.

NR: TSR20
BR1: Ubepol BR150B manufactured by Ube Industries, Ltd. (cis content: 97%)
BR2: Ubepol VCR617 manufactured by Ube Industries, Ltd. (cis content: 98%)
SBR: SBR1502 manufactured by JSR Corporation (E-SBR, styrene content: 23.5% by mass, vinyl content: 18 mol%, Mw: 420,000)
Organic nanomaterial 1: Cellenpia manufactured by Nippon Paper Industries Co., Ltd. (cellulose nanofiber, average diameter: 3-4 nm, average length: hundreds of nm to 1 $\mu$m)

Organic nanomaterial 2: BiNFi-s FMa-10002 manufactured by Sugino Machine Limited (cellulose nanofiber, viscosity of 2% by mass of dispersion liquid: 700 mPa·s, average diameter: 20 nm, average length: 0.55 $\mu$m)

Organic nanomaterial 3: BiNFi-s chitin manufactured by Sugino Machine Limited (chitin nanofiber, viscosity of 2% by mass of dispersion liquid: 3,000 mPa·s, average diameter: 30 nm, average length: 4 $\mu$m)

Carbon Black 1: Show Black N330 manufactured by Cabot Japan K.K. ($N_2SA$: 75 $m^2/g$, DBP oiling quantity: 102 mL/100 g)

Carbon Black 2: Show Black N550 manufactured by Cabot Japan K.K. ($N_2SA$: 42 $m^2/g$, DBP oiling quantity: 113 mL/100 g)

Oil: Diana Process AH-24 manufactured by Idemitsu Kosan Co., Ltd.

Antioxidant: OZONONE 6C manufactured by Seiko Chemical Co., Ltd. (N-(1,3-dimethylbutyl)-N'-phenyl-p-phenylenediamine)

Stearic acid: Stearic acid "CAMELLIA" manufactured by NOF CORPORATION

Zinc oxide: Zinc oxide No. 1 manufactured by Mitsui Mining & Smelting Co., Ltd.

Wax: OZOACE 0355 manufactured by Nippon Seiro Co., Ltd.

Sulfur: Powdered sulfur manufactured by Tsurumi Chemical Industry Co., Ltd.

Vulcanization Accelerator 1: Sanceler NS-G manufactured by Ouchi Shinko Chemical Industry Co., Ltd. (di-2-benzothiazolyl disulfide)

Vulcanization accelerator 2: Nocceler NS manufactured by Ouchi Shinko Chemical Industry Co., Ltd. (N-tert-butyl-2-benzothiazolylsulfenamide)

Vulcanization accelerator 3: TACKIROL V-200 manufactured by Taoka Chemical Co., Ltd.

(Examples and Comparative examples)

According to the compounding formulations shown in Tables 1 and 2, using a 1.7 L closed Banbury mixer, all chemicals other than sulfur and vulcanization accelerators were kneaded until reaching a discharge temperature at 170°C for 5 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized at 170°C for 12 minutes to produce a test vulcanized rubber sheet. Moreover, the unvulcanized rubber composition was extruded into a shape of an inner layer sidewall (a member A) or a strip apex (a member B) with an extruder equipped with a mouthpiece having a predetermined shape to obtain members A and B in which organic nanomaterials were oriented in a grain direction. Then, the members A and B were attached together with other tire members on the tire molding machine so that the organic nanomaterials were oriented in the tire circumferential direction to form an unvulcanized tire, and this unvulcanized tire was press-vulcanized under a condition at 170°C for 12 minutes to produce a tire (size: 205/65R15). Tables 1 and 2 show positions of the inner and outer ends in the tire radial direction of the members A and B with respect to the tire cross-sectional height H, and positions from the sidewall surface.

<Measurement of tangent loss tan $\delta$>

Using a spectrometer manufactured by Ueshima Seisakusho Co., Ltd., tan $\delta$ was measured under a condition of an initial strain of 10%, a dynamic strain amplitude of 1%, a frequency of 10 Hz, and a temperature at 70°C in each test vulcanized rubber sheet.

<Anisotropy test>

The above-described vulcanized rubber sheet was punched in a grain direction (a roll rotation direction when producing an unvulcanized rubber sheet before vulcanization) with a JIS No. 3 dumbbell, and a tensile stress at 100% elongation (M100a) in the grain direction was measured under a condition of a tensile speed at 500 mm/min according to JIS K 6251: 2017. Similarly, the vulcanized rubber sheet was punched in a cross-grain direction (a direction perpendicular from the roll rotation direction when producing an unvulcanized rubber sheet before vulcanization) with the JIS No. 3 dumbbell, and a tensile stress at 100% elongation (M100b) in the cross-grain direction was measured under the condition of a tensile speed at 500 mm/min according to JIS K 6251: 2017.

<Evaluation on ride comfort and steering stability>

A prototype tire was incorporated into a standard rim (size = 16 × 6.5J) and filled with air to set an internal pressure to 210 kPa. This tire was mounted to a car with a displacement of 2000 cc. This car was run on a test course having an asphalt road surface, and sensory evaluations on ride comfort and stability of control during steering (steering stability) were performed by a test driver. The evaluations were performed on a scale of 10 points, where relative evaluations were performed with Comparative example 7 being as 6.0 points. The results show that the higher the score is, the better the ride comfort and steering stability are.

Table 1

| | Example | | | | | | | | | |
|---|---|---|---|---|---|---|---|---|---|---|
| | 1 | 2 | 3 | 4 | 5 | 6 | 7 | 8 | 9 | 10 |
| Compounding amount (part by mass) | | | | | | | | | | |
| NR | 50 | 70 | 50 | 50 | 50 | 50 | 50 | 70 | 70 | 70 |
| BR1 | 15 | - | 50 | 15 | 15 | 15 | 15 | - | - | - |
| BR2 | 35 | - | - | 35 | 35 | 35 | 35 | - | - | - |
| SBR | - | 30 | - | - | - | - | - | 30 | 30 | 30 |
| Organic nanomaterial 1 | 10 | 15 | 10 | 5.0 | 30 | 40 | 45 | - | - | 15 |
| Organic nanomaterial 2 | - | - | - | - | - | - | - | 15 | - | - |
| Organic nanomaterial 3 | - | - | - | - | - | - | - | - | 15 | - |
| Carbon black 1 | - | 35 | - | - | 35 | 35 | 35 | 35 | 35 | 35 |
| Carbon black 2 | 15 | 10 | 40 | 15 | 10 | 15 | 10 | 10 | 10 | 10 |
| Oil | 5.0 | 10 | 5.0 | 5.0 | 5.0 | 5.0 | 5.0 | 10 | 10 | 10 |
| Antioxidant | 3.0 | - | 3.0 | 3.0 | 3.0 | 3.0 | 3.0 | - | - | - |
| Stearic acid | 2.0 | 2.0 | 2.0 | 2.0 | 2.0 | 2.0 | 2.0 | 2.0 | 2.0 | 2.0 |
| Zinc oxide | 4.0 | 3.0 | 3.0 | 4.0 | 4.0 | 4.0 | 4.0 | 3.0 | 3.0 | 3.0 |
| Wax | 1.0 | - | 1.0 | 1.0 | 1.0 | 1.0 | 1.0 | - | - | - |
| Sulfur | 1.5 | 4.0 | 1.5 | 1.5 | 1.5 | 1.5 | 1.5 | 4.0 | 4.0 | 4.0 |
| Vulcanization accelerator 1 | - | 0.1 | - | - | - | - | - | 0.1 | 0.1 | 0.1 |
| Vulcanization accelerator 2 | 1.0 | 1.0 | 1.0 | 1.0 | 1.0 | 1.0 | 1.0 | 1.0 | 1.0 | 1.0 |
| Vulcanization accelerator 3 | 0.5 | - | - | 0.5 | 0.5 | 0.5 | 0.5 | - | - | - |
| Rubber layer | | | | | | | | | | |
| Member | A | B | A | A | A | A | A | B | B | B |
| Position of inner end (%) | 10 | 5 | 10 | 10 | 10 | 10 | 10 | 5 | 5 | 5 |
| Position of outer end (%) | 80 | 50 | 80 | 80 | 80 | 80 | 80 | 50 | 50 | 40 |
| Position from sidewall surface (mm) | 1.0 | 2.0 | 1.0 | 1.0 | 1.0 | 1.0 | 1.0 | 2.0 | 2.0 | 2.0 |
| $\tan \delta$ (70°C) | 0.09 | 0.12 | 0.15 | 0.10 | 0.25 | 0.30 | 0.35 | 0.14 | 0.13 | 0.12 |
| M100a/M100b | 1.25 | 1.20 | 1.20 | 1.10 | 1.40 | 1.50 | 1.40 | 1.15 | 1.15 | 1.20 |
| Evaluation | | | | | | | | | | |
| Ride comfort | 8.5 | 7.5 | 8.0 | 7.5 | 8.0 | 8.0 | 7.5 | 7.0 | 7.0 | 7.0 |
| Steering stability | 7.5 | 8.5 | 6.5 | 7.0 | 8.0 | 8.0 | 7.5 | 7.0 | 7.0 | 6.0 |

Table 2

| | Comparative example | | | | | | |
|---|---|---|---|---|---|---|---|
| | 1 | 2 | 3 | 4 | 5 | 6 | 7 |
| Compounding amount (part by mass) | | | | | | | |
| NR | 50 | 50 | 50 | 100 | 70 | 50 | 70 |
| BR1 | 25 | 50 | 25 | - | - | 25 | - |
| BR2 | 25 | - | 25 | - | - | 25 | - |
| SBR | - | - | - | - | 30 | - | 30 |
| Organic nanomaterial 1 | - | - | 10 | - | - | 10 | 15 |
| Organic nanomaterial 2 | - | - | - | - | - | - | - |

(continued)

| | Comparative example | | | | | | |
|---|---|---|---|---|---|---|---|
| | 1 | 2 | 3 | 4 | 5 | 6 | 7 |
| **Compounding amount (part by mass)** | | | | | | | |
| Organic nanomaterial 3 | - | - | - | - | - | - | - |
| Carbon black 1 | 10 | - | 10 | - | 60 | - | 35 |
| Carbon black 2 | 20 | 40 | - | 50 | - | 40 | 10 |
| Oil | 5.0 | 5.0 | 5.0 | 5.0 | 10 | 5.0 | 10 |
| Antioxidant | 2.5 | 3.0 | 2.5 | - | - | - | - |
| Stearic acid | 2.0 | 2.0 | 2.0 | 3.0 | 20 | 3.0 | 2.0 |
| Zinc oxide | 3.0 | 3.0 | 3.0 | 6.0 | 3.0 | 6.0 | 3.0 |
| Wax | 1.0 | 1.0 | 1.0 | - | - | - | - |
| Sulfur | 2.5 | 1.5 | 2.5 | 4.5 | 2.5 | 4.5 | 4.0 |
| Vulcanization accelerator 1 | - | - | - | - | - | - | 0.1 |
| Vulcanization accelerator 2 | 1.0 | 1.0 | 1.0 | 2.0 | 2.0 | 2.0 | 1.0 |
| Vulcanization accelerator 3 | - | - | - | - | - | - | - |
| **Rubber layer** | | | | | | | |
| Member | A | A | A | B | B | B | B |
| Position of inner end (%) | 10 | 10 | 10 | 5 | 5 | 5 | 5 |
| Position of outer end (%) | 80 | 80 | 80 | 50 | 50 | 50 | 25 |
| Position from sidewall surface (mm) | 1.0 | 1.0 | 1.0 | 2.0 | 2.0 | 2.0 | 2.0 |
| tan $\delta$ (70°C) | 0.06 | 0.15 | 0.07 | 0.07 | 0.15 | 0.07 | 0.12 |
| M100a/M100b | 1.05 | 1.00 | 1.20 | 1.00 | 1.00 | 1.15 | 1.20 |
| **Evaluation** | | | | | | | |
| Ride comfort | 5.0 | 5.5 | 5.5 | 5.0 | 6.0 | 5.0 | 6.0 |
| Steering stability | 6.0 | 5.5 | 6.0 | 6.0 | 6.0 | 6.5 | 6.0 |

From the results in Tables 1 and 2, it can be found that the tire of the present disclosure, in which a rubber layer formed of a rubber composition comprising an organic nanomaterial is arranged at a specific position on a tire side part, has improved ride comfort and steering stability with a good balance.

EXPLANATION OF NUMERALS

1. Tread
2. Belt
3. Band
21. Bead core
22. Bead apex
23. Rim cushion
24. Clinch apex
25. Strip apex
31. Sidewall
32. Inner liner
33. First carcass ply
34. Second carcass ply
CL. Tire equator
H1. Region of 25 to 50% of H

**Claims**

1. A tire comprising a tread part extending in a circumferential direction to form an annular shape, a pair of sidewall parts arranged on both sides of the tread part, a pair of bead parts, each of the pair of bead parts having a bead core, at least one carcass layer moored to the bead core, a chafer in contact with a rim,

    wherein the tire has a rubber layer formed of a rubber composition comprising an organic nanomaterial having shape anisotropy at a position outer side in a tire axial direction with respect to an innermost carcass layer and inner side in a tire axial direction with respect to a sidewall surface,
    wherein the rubber layer is arranged so as to cover a part or all of a region of 25 to 50% of a tire cross-sectional height H, and
    wherein the rubber composition satisfies the following Inequality (1) and (2):

$$\tan \delta \ (70°C) \geq 0.08 \ (1)$$

$$1.10 \leq (M100a/M100b) \leq 1.50 \ (2)$$

    wherein $\tan \delta$ (70°C) in Inequality (1) represents a $\tan \delta$ when a viscoelasticity measurement is performed under a condition of an initial strain of 10%, a dynamic strain amplitude of 1%, a frequency of 10 Hz, and a temperature at 70°C, M100a in Inequality (2) represents a 100% modulus in a grain direction, as measured under a condition of a tensile speed at 500 mm/min according to JIS K 6251:2017, and M100b in Inequality (2) represents a 100% modulus in a cross-grain direction as measured under a condition of a tensile speed at 500 mm/min according to JIS K 6251:2017.

2. The tire of claim 1, wherein the organic nanomaterial is a biomass nanomaterial.

3. The tire of claim 1 or 2, wherein the rubber composition comprises 1 to 50 parts by mass of the organic nanomaterial based on 100 parts by mass of the rubber component, and wherein the organic nanomaterial has an average diameter D of 1.0 to 2000 nm, an average length L of 0.10 to 10 μm, and an aspect ratio L/D of 2 to 500.

4. The tire of any one of claims 1 to 3, wherein the organic nanomaterial comprises nanocellulose.

5. The tire of any one of claims 1 to 4, wherein the rubber layer is a strip apex, the strip apex being located inner side in the tire axial direction with respect to the carcass layer folded by the bead core and being sandwiched between the carcass layers.

6. The tire of claim 5, wherein the rubber composition comprises a rubber component comprising 30% by mass or more of a styrene-butadiene rubber.

7. The tire of claim 5 or 6, wherein the strip apex is arranged so as to cover the entire region of 25 to 50% of the tire cross-sectional height H.

8. The tire of any one of claims 5 to 7, wherein the strip apex is completely covered by a main part and a folded part of a carcass ply.

9. The tire of any one of claims 5 to 8, wherein the carcass layer comprises two layers of a first carcass ply and a second carcass ply.

10. The tire of any one of claims 1 to 4, wherein the rubber layer is an inner layer sidewall.

11. The tire of claim 10, wherein M100a/M100b of the rubber composition is 1.25 or more.

12. The tire of claim 10 or 11, wherein $\tan \delta$ (70°C) of the rubber composition is 0.25 or more.

13. The tire of any one of claims 10 to 12, wherein the rubber composition comprises 30 to 50 parts by mass of the organic nanomaterial based on 100 parts by mass of the rubber component.

**EP 4 049 863 B1**

**Patentansprüche**

1. Reifen, umfassend einen Laufflächenteil, der sich in einer Umfangsrichtung erstreckt, um eine Ringform zu bilden, ein Paar Seitenwandteile, die auf beiden Seiten des Laufflächenteils angeordnet sind, ein Paar Wulstteile, wobei jedes des Paares von Wulstteilen einen Wulstkern, mindestens eine Karkassenschicht, die an dem Wulstkern befestigt ist, ein Wulstband in Kontakt mit einer Felge aufweist,

   wobei der Reifen eine Kautschukschicht aufweist, die aus einer Kautschukzusammensetzung gebildet ist, die ein organisches Nanomaterial mit Formanisotropie an einer Position an der Außenseite in einer axialen Richtung des Reifens in Bezug auf eine innerste Karkassenschicht und an der Innenseite in einer axialen Richtung des Reifens in Bezug auf eine Seitenwandoberfläche umfasst,
   wobei die Kautschukschicht so angeordnet ist, dass sie einen Teil oder die Gesamtheit eines Bereichs von 25 bis 50 % einer Reifenquerschnittshöhe H abdeckt, und
   wobei die Kautschukzusammensetzung die folgenden Ungleichungen (1) und (2) erfüllt:

$$\tan \delta \ (70°C) \geq 0{,}08 \ (1)$$

$$1{,}10 \leq (M100a/M100b) \leq 1{,}50 \ (2)$$

   wobei $\tan \delta$ (70°C) in Ungleichung (1) einen $\tan \delta$ darstellt, wenn eine Viskoelastizitätsmessung unter der Bedingung einer anfänglichen Dehnung von 10 %, einer dynamischen Dehnungsamplitude von 1 %, einer Frequenz von 10 Hz und einer Temperatur von 70 °C durchgeführt wird, M100a in Ungleichung (2) einen 100%-Modul in einer Faserrichtung darstellt, gemessen unter der Bedingung einer Zuggeschwindigkeit von 500 mm/min gemäß JIS K 6251:2017, und M100b in Ungleichung (2) einen 100%-Modul in einer Faserquerrichtung darstellt, gemessen unter der Bedingung einer Zuggeschwindigkeit von 500 mm/min gemäß JIS K 6251:2017.

2. Reifen nach Anspruch 1, wobei das organische Nanomaterial ein Biomasse-Nanomaterial ist.

3. Reifen nach Anspruch 1 oder 2, wobei die Kautschukzusammensetzung 1 bis 50 Masseteile des organischen Nanomaterials, bezogen auf 100 Masseteile der Kautschukkomponente, umfasst, und wobei das organische Nanomaterial einen durchschnittlichen Durchmesser D von 1,0 bis 2000 nm, eine durchschnittliche Länge L von 0,10 bis 10 μm und ein Seitenverhältnis L/D von 2 bis 500 aufweist.

4. Reifen nach einem der Ansprüche 1 bis 3, wobei das organische Nanomaterial Nanocellulose umfasst.

5. Reifen nach einem der Ansprüche 1 bis 4, wobei die Kautschukschicht ein bandförmiger Wulstkeil ist, wobei der bandförmige Wulstkeil in der axialen Richtung des Reifens in Bezug auf die Karkassenschicht, die durch den Wulstkern gefaltet ist, auf der Innenseite liegt und zwischen den Karkassenschichten liegt.

6. Reifen nach Anspruch 5, wobei die Kautschukzusammensetzung eine Kautschukkomponente umfasst, die 30 Masse-% oder mehr eines Styrol-Butadien-Kautschuks enthält.

7. Reifen nach Anspruch 5 oder 6, wobei der bandförmige Wulstkeil so angeordnet ist, dass er den gesamten Bereich von 25 bis 50 % der Reifenquerschnittshöhe H abdeckt.

8. Reifen nach einem der Ansprüche 5 bis 7, wobei der bandförmige Wulstkeil vollständig von einem Hauptteil und einem gefalteten Teil einer Karkassenlage bedeckt ist.

9. Reifen nach einem der Ansprüche 5 bis 8, wobei die Karkassenschicht zwei Schichten aus einer ersten Karkassenlage und einer zweiten Karkassenlage umfasst.

10. Reifen nach einem der Ansprüche 1 bis 4, wobei die Kautschukschicht eine innere Seitenwand ist.

11. Reifen nach Anspruch 10, wobei M100a/M100b der Kautschukmischung 1,25 oder mehr beträgt.

12. Reifen nach Anspruch 10 oder 11, wobei $\tan \delta$ (70°C) der Kautschukmischung 0,25 oder mehr beträgt.

14

**13.** Reifen nach einem der Ansprüche 10 bis 12, wobei die Kautschukzusammensetzung 30 bis 50 Masseteile des organischen Nanomaterials bezogen auf 100 Masseteile der Kautschukkomponente umfasst.

## Revendications

**1.** Pneu comprenant une partie de bande de roulement s'étendant dans une direction circonférentielle pour former une forme annulaire, une paire de parties de flanc disposées des deux côtés de la partie de bande de roulement, une paire de parties de tringle, chacune de la paire de parties de tringle ayant un noyau de tringle, au moins une couche de carcasse amarrée au noyau de tringle, un chafer en contact avec une jante,

dans lequel le pneu a une couche de caoutchouc formée d'une composition de caoutchouc comprenant un nanomatériau organique ayant une anisotropie de forme à une position extérieure dans une direction axiale du pneu par rapport à une couche de carcasse la plus intérieure et à une position de côté intérieure dans une direction axiale du pneu par rapport à une surface de flanc,
dans lequel la couche de caoutchouc est disposée de manière à couvrir une partie ou la totalité d'une région de 25 à 50 % de la hauteur de section transversale H d'un pneu, et
dans lequel la composition de caoutchouc satisfait aux inégalités suivantes (1) et (2) :

$$\tan \delta \ (70°C) \geq 0,08 \ (1)$$

$$1,10 \leq (M100a/M100b) \leq 1,50 \ (2)$$

dans laquelle $\tan \delta$ (70°C) dans l'inégalité (1) représente un $\tan \delta$ lorsqu'une mesure de viscoélasticité est effectuée dans des conditions de déformation initiale de 10 %, d'amplitude de déformation dynamique de 1 %, de fréquence de 10 Hz et de température de 70°C, M100a dans l'inégalité (2) représente un module de 100 % dans une direction du grain, tel que mesuré dans des conditions d'une vitesse de traction de 500 mm/min conformément à la norme JIS K 6251:2017, et M100b dans l'inégalité (2) représente un module de 100 % dans une direction transversale au grain, mesuré dans des conditions d'une vitesse de traction de 500 mm/min conformément à la norme JIS K 6251:2017.

**2.** Pneu selon la revendication 1, dans lequel le nanomatériau organique est un nanomatériau de biomasse.

**3.** Pneu selon la revendication 1 ou 2, dans lequel la composition de caoutchouc comprend 1 à 50 parties en masse du nanomatériau organique sur la base de 100 parties en masse du composant de caoutchouc, et dans lequel le nanomatériau organique a un diamètre moyen D de 1,0 à 2 000 nm, une longueur moyenne L de 0,10 à 10 $\mu$m, et un rapport d'aspect L/D de 2 à 500.

**4.** Pneu selon l'une quelconque des revendications 1 à 3, dans lequel le nanomatériau organique comprend de la nanocellulose.

**5.** Pneu selon l'une quelconque des revendications 1 à 4, dans lequel la couche de caoutchouc est un apex de bande, l'apex de bande étant situé côté intérieur dans la direction axiale du pneu par rapport à la couche de carcasse pliée par le noyau de tringle et étant prise en sandwich entre les couches de carcasse.

**6.** Pneu selon la revendication 5, dans lequel la composition de caoutchouc comprend un composant de caoutchouc comprenant 30 % en masse ou plus d'un caoutchouc styrène-butadiène.

**7.** Pneu selon la revendication 5 ou 6, dans lequel l'apex de bande est disposé de manière à couvrir toute la région de 25 à 50 % de la hauteur de section transversale H du pneu.

**8.** Pneu de l'une quelconque des revendications 5 à 7, dans lequel l'apex de bande est entièrement couvert par une partie principale et une partie pliée d'une nappe de carcasse.

**9.** Pneu selon l'une quelconque des revendications 5 à 8, dans lequel la couche de carcasse comprend deux couches d'une première nappe de carcasse et d'une deuxième nappe de carcasse.

**10.** Pneu selon l'une quelconque des revendications 1 à 4, dans lequel la couche de caoutchouc est un flanc de couche intérieure.

**11.** Pneu selon la revendication 10, dans lequel M100a/M100b de la composition de caoutchouc est de 1,25 ou plus.

**12.** Pneu selon la revendication 10 ou 11, dans lequel tan $\delta$ (70°C) de la composition de caoutchouc est de 0,25 ou plus.

**13.** Pneu selon l'une quelconque des revendications 10 à 12, dans lequel la composition de caoutchouc comprend 30 à 50 parties en masse du nanomatériau organique sur la base de 100 parties en masse du composant de caoutchouc.

# FIG. 1

# FIG. 2

# FIG. 3

## EP 4 049 863 B1

**Patent documents cited in the description**

- JP 5691463 B
- JP 2018154181 A